Europäisches Patentamt

European Patent Office

Office européen des brevets

(11) Veröffentlichungsnummer: **0 452 632 A2**

# (12) EUROPÄISCHE PATENTANMELDUNG

(21) Anmeldenummer: **91102688.8**

(22) Anmeldetag: **23.02.91**

(51) Int. Cl.5: **C09K 3/00**

(30) Priorität: **03.03.90 DE 4006688**

(43) Veröffentlichungstag der Anmeldung:
**23.10.91 Patentblatt  91/43**

(84) Benannte Vertragsstaaten:
**AT BE CH DE DK ES FR GB GR IT LI NL SE**

(71) Anmelder: **Kali-Chemie Aktiengesellschaft**
**Postfach 220, Hans-Böckler-Allee 20**
**W-3000 Hannover 1(DE)**

(72) Erfinder: **Buchwald, Hans**
**Am Rodelberg 51 A**
**W-3003 Ronnenberg(DE)**
Erfinder: **Brackmann, Andreas**
**Hedwigstrasse 10**
**W-3000 Hannover 1(DE)**
Erfinder: **Raszkowski, Boleslaus**
**In der Hespe 246**
**W-3061 Wiedensahl(DE)**

(74) Vertreter: **Lauer, Dieter, Dr.**
**c/o Solvay Deutschland GmbH, Postfach 220**
**W-3000 Hannover(DE)**

(54) Zusammensetzungen mit dichlorpentafluorpropanen.

(57) Beschrieben werden flüssige Zusammensetzungen mit trennmittelwirksamen Eigenschaften, die Dichlorpentafluorpropane und wenigstens ein Agens mit trennmittelwirksamen Eigenschaften enthalten, sowie die Verwendung dieser Zusammensetzungen und ein Verfahren zu deren Herstellung.

EP 0 452 632 A2

Rank Xerox (UK) Business Services

Die vorliegende Erfindung betrifft flüssige Zusammensetzungen, die wenigstens ein Dichlorpentafluorpropan und wenigstens ein Agens mit trennmittelwirksamen Eigenschaften enthalten, sowie die Verwendung dieser Zusammensetzungen und ein Verfahren zu deren Herstellung.

In vielen industriellen Anwendungsbereichen, die Arbeitsvorgänge wie Gießen, Formen, Pressen usw. umfassen - z.B. bei der Herstellung und Verarbeitung von Kunststoffen, Schaumstoffen, Baustoffen, Gummiartikeln, Reifen, Metallen, Gläsern, Keramikprodukten usw. - werden heute Trennmittel, Gleitmittel oder Schalmittel benötigt. Trennmittel sind in diesem Zusammenhang feste oder flüssige Filme, die die Adhäsionskräfte zwischen zwei aneinandergrenzenden Oberflächen verringern, d.h. ihr Verkleben verhindern. Gleitmittel sind Zusatzstoffe für plastische Massen, zum Beispiel Preßmassen und Spritzgußmassen. Sie werden benötigt um die Füllstoffe leichter gleitend und die Preßmassen damit leichter verformbar zu machen. Die Trenn-, Gleit- bzw. Schalmittel enthalten trennmittelwirksame Komponenten, zum Beispiel in Form von trockenen Pulvern, von trockenen Filmen oder Naßfilmen, Pasten, eingebrannten Filmen, Lösungen oder Dispersionen. Eine Sonderform stellen die sogenannten internen trennmittelwirksamen Komponenten dar, die in das zu entformende Gut eingemischt werden und sich entweder an der Oberfläche anzureichern vermögen oder eine schnellere Aushärtung der Oberfläche bewirken, so daß es zwischen Formwand und Formteil zu keinem Verbund kommt.

Vielfach müssen bei obigen Arbeitsvorgängen von Zeit zu Zeit die Rückstände des Agens mit trennmittelwirksamen Eigenschaften mit Hilfe von Lösungsmitteln aus der Form entfernt werden. Gewöhnlich werden zur Reinigung der Formen Lösungsmittel wie Kohlenwasserstoffe und Chlorkohlenwasserstoffe verwendet, von denen die ersten feuergefährlich sind und die zweiten Hautreizungen verursachen. Nach einem Verfahren aus der deutschen Offenlegungsschrift 25 52 236 ist ein Formtrennmittel für die Herstellung geformter Kautschukprodukte und die Verformung von Polyurethanschaumstoffen bekannt. Die dort verwendete Formtrennmasse enthält Paraffinwachs, Leuchtöl und Natriumseifen von Tallölsäuren in einem paraffinischen Grundöl. Das eingesetzte Formtrennmittel muß in Wasser löslich oder emulgierbar sein, um durch Sprühen oder Waschen mit warmem Wasser das Formtrennmittel vom Formprodukt trennen zu können. In der deutschen Offenlegungsschrift 33 35 870 wird die Herstellung von speziellen Wachsderivaten beschrieben, die zum Beispiel als Trennmittelbestandteile, insbesondere aber als Kühlschmiermittel, verwendet werden können, wobei als Lösungsmittel die Fluorchlorkohlenwasserstoffe Trichlormonofluormethan, 1,1,2-Trichlor-1,2,2-trifluorethan, 1,1,2,2-Tetrachlordifluorethan, Tetrachlormonofluorethan und/oder Trichlordifluorethan als geeignet angegeben werden. Aus der deutschen Offenlegungsschrift 37 31 223 sind auch bereits Zusammensetzungen mit trennmittelwirksamen Bestandteilen bekannt, die Dichlortrifluorethane enthalten.

Im Stand der Technik wurden zwar bereits viele Anstrengungen unternommen, um für verschiedene Anwendungsgebiete und für verschiedene Materialien Trennmittelzusammensetzungen mit den gewünschten Eigenschaften, wie z.B. hohe Ergiebigkeit, gutes Spreitungsvermögen, verbesserte adhäsionsvermindernde Eigenschaften und gute chemische Indifferenz, bereitzustellen. Dennoch besteht aus anwendungstechnischen, toxikologischen und Umweltgründen immer noch Bedarf an neuen Zusammensetzungen mit trennmittelwirksamen Eigenschaften.

Die Aufgabe der Erfindung war daher, neue verbesserte flüssige Zusammensetzungen von Agentien mit trennmittelwirksamen Eigenschaften bereitzustellen, die eine sparsame Verwendung gestatten, die ohne häufiges Reinigen der benutzten Formen verwendet werden können und deren Verdünnungs- bzw. Lösungsmittelbestandteile eine erhöhte Lösekraft besitzen.

Die Aufgabe wird gelöst durch die erfindungsgemäßen Zusammensetzungen, Verwendungen und Verfahren.

Die vorliegende Erfindung stellt flüssige Zusammensetzungen mit verbesserten Eigenschaften zur Verfügung, die wenigstens ein Verdünnungsmittel bzw. Lösungsmittel und mindestens ein Agens mit trennmittelwirksamen Eigenschaften enthalten, wobei als Verdünnungs- bzw. Lösungsmittel wenigstens eines der Isomere des Dichlorpentafluorpropans enthalten ist und als trennmittelwirksames Agens Wachse, Wachsderivate, Metallseifen oder Silicone oder ein Gemisch von diesen in einer Menge von 0,1 bis 80 Gew.-%, vorzugsweise 0,1 bis 50 Gew.-%, bezogen auf das Gesamtgemisch vorliegen.

Dichlorpentafluorpropane im Sinne der Erfindung sind die ein Wasserstoffatom tragenden Fluorchlorkohlenwasserstoffe der Summenformel $C_3HCl_2F_5$. Es handelt sich insbesondere um die nicht vollhalogenierten isomeren Fluorchlorkohlenwasserstoffe 1,2-Dichlor-1,1,2,3,3-pentafluorpropan, 2,3-Dichlor-1,1,1,2,3-pentafluorpropan, 1,1-Dichlor-2,2,3,3,3-pentafluorpropan (= 3,3-Dichlor-1,1,1,2,2-pentafluorpropan), 1,3-Dichlor-1,1,2,2,3-pentafluorpropan, 1,1-Dichlor-1,2,2,3,3-pentafluorpropan, 1,2-Dichlor-1,1,3,3,3-pentafluorpropan, 1,1-Dichlor-1,2,3,3,3-pentafluorpropan. Bevorzugte Dichlorpentafluorpropane sind 1,1-Dichlor-2,2,3,3,3-pentafluorpropan (R225ca) und 1,3-Dichlor-1,1,2,2,3-pentafluorpropan (R225cb). Weiterhin können die Dichlorpentafluorpropan-Isomere oder deren Gemische mit anderen Fluorchlorkohlenwasserstoffen mit 1 bis 6 C-Atomen, insbesondere z.B. Trichlormonofluormethan, Trichlortrifluorethan, Tetrachlordifluorethan, Tetrachlormonofluorethan, Trichlordifluorethan, Dichlormonofluorethan, Monochlorhexafluorpropan oder deren Gemische, in erfindungsgemäßen Zusammensetzungen eingesetzt werden. Die Dichlorpentafluorpropan-Isomere können in erfindungsgemäßen Zusammensetzungen auch in Form eines Azeotrops mit anderen Lösungsmitteln - z.B. mit Fluorchlorkohlenwasserstoffen, Fluorkohlenwasserstoffen, Chlorkohlenwasserstoffen, Kohlenwasserstoffen, Alkoholen, Ethern usw. - enthalten sein.

Die erfindungsgemäßen Zusammensetzungen werden weiterhin dadurch gekennzeichnet, daß das trennmittelwirksame Agens ausgewählt ist aus der Gruppe der Wachse, Wachsderivate, Metallseifen oder Silicone.

Als Wachse im Sinne der Erfindung werden in einer Variante natürliche Wachse tierischer oder pflanzlicher Herkunft, vorzugsweise natürliche Wachse mit einem Erweichungspunkt von mindestens 40 °C, eingesetzt.

In einer anderen Variante der Erfindung sind die Wachse ungesättigte langkettige Ester von Carbonsäuren mit Monoalkoholen mit insgesamt 34 bis 50 C-Atomen. Bevorzugt sind hierbei Fettsäureester, die eine Iodzahl von unter 95, vorzugsweise von 30 bis 95, insbesondere 75 bis 95 aufweisen. Gemische solcher Fettsäureester sind kommerziell verfügbar und beispielsweise im Handbook of Chemistry and Physics, 55. Auflage, Seite C-753 beschrieben.

Eine weitere Variante ist dadurch gekennzeichnet, daß die Wachsderivate Derivate sind, die durch Sulfochlorierung, Sulfidierung oder Fluorwasserstoffbehandlung von ungesättigten langkettigen Estern von Carbonsäuren mit Monoalkoholen mit insgesamt 34 bis 50 C-Atomen erhalten werden. Die durch Fluorwasserstoffbehandlung erhaltenen Derivate sind zum Beispiel aus der deutschen Offenlegungsschrift 33 35 870 bekannte, fluorenthaltende, wachsartige Massen, deren Fluorgehalt in einem weiten Bereich variierbar ist. Der Fluorgehalt dieser Addukte von Fluorwasserstoff an diese ungesättigten langkettigen Ester liegt z.B. im Bereich von 0,1 bis 4,3 Gew.-%. Eine völlig andere Art von Derivaten der langkettigen ungesättigten Ester, die durch Fluorwasserstoffbehandlung erhältlich sind, sind ölige Produkte (nachstehend Sesquimere genannt) die gegenüber dem Ausgangswachs die 1,1 bis 1,9-fache Molmasse haben und einen Gehalt an nicht umgesetztem Wachs von unter 1 Gew.-% enthalten. Diese Wachsderivate enthalten - wenn überhaupt - nur sehr geringe Gehalte an gebundenem Fluor. In der Regel liegt der Fluorgehalt unter 0,1 Gew.-% und die Iodzahl in einem Bereich von 5 bis 20.

Es können auch andere Wachsderivate, z.B. durch Hydrierung von ungesättigten langkettigen Estern von Carbonsäuren mit Monoalkoholen mit insgesamt 34 bis 50 C-Atomen erhaltene, nunmehr teilgesättigte oder vollständig gesättigte Derivate eingesetzt werden. In diesem Zusammenhang werden unter teilgesättigten Derivaten solche verstanden, deren Iodzahl unter der des bei der Hydrierung eingesetzten Eduktes liegt.

Weitere Wachse, die im Sinne vorliegender Erfindung verwendet werden, sind synthetische Wachse, vorzugsweise Paraffinwachse oder Polyethylenwachse. In einer Variante wird zum Beispiel ein oxidiertes Polyethylenwachs mit mittlerem Molekulargewicht von 3700 bis 4500 (viskosimetrisch) und einer Säurezahl von 20 bis 30 und einem Schmelzpunkt von 89 bis 99 °C eingesetzt.

In einer anderen Art der erfindungsgemäßen Zusammensetzungen sind Silicone enthalten. Die verwendeten Silicone können in der Form von ölen, Fetten oder Harzen vorliegen. Die Silicone können als solche oder in Form von Siliconölemulsionen oder Siliconpasten, die einen Konsistenzregler, beispielsweise hochdisperse Kieselsäure, in das Siliconöl eingearbeitet enthalten, verwendet werden. Siliconfette enthalten gewöhnlich Metallseifen als konsistenzregelnde Bestandteile. Die in der vorliegenden Erfindung verwendeten Siliconprodukte sind im Handel verfügbare Produkte.

Eine weitere Variante der Erfindung ist dadurch gekennzeichnet, daß die Zusammensetzungen Metallseifen, beispielsweise fettsaure Salze der Metalle Magnesium, calcium, Zink, Aluminium oder Blei enthalten. Gegebenenfalls werden die Metallsalze der Stearinsäure eingesetzt, wobei dann das Magnesiumstearat bevorzugt ist.

In einer Abwandlung der Erfindung ist es vorgesehen, den Zusammensetzungen übliche Lösungsvermittler für das trennmittelwirksame Agens zuzusetzen. Als Lösungsvermittler kommen bekannte toxikologisch unbedenkliche Lösungsmittel mit lösungsvermittelnden Eigenschaften in Frage, die in Mengen von 1 bis 80 Gew.-%, vorzugsweise 10 bis 30 Gew.-% in den Zusammensetzungen enthalten sein können. Die Prozentangaben beziehen sich hierbei auf das Gesamtgemisch. Eine Ausführungsform dieser Abwandlung der Erfindung zeichnet sich dadurch aus, daß als Lösungsvermittler ein aliphatisches Kohlenwasserstoff-Lösungsmittel, vorzugsweise eine Benzinfraktion mit einem Siedebereich von z.B. 100 bis 140 °C, verwendet wird. Es können auch andere an sich bekannte Lösungsvermittler Verwendung finden.

Bei den Ausgestaltungen der erfindungsgemäßen Zusammensetzungen kann es vorgesehen sein, zusätzlich bis zu 1 Gew.-% bekannter Korrosionsinhibitoren zuzusetzen. Solche Korrosionsinhibitoren für Metalle wie z.B. Magnesium, Aluminium, Titan, Messing, Bronze, Stahl sind kommerziell Verfügbar. Sie basieren zumeist auf Zusammensetzungen, die organische Verbindungen mit Heteroatomen wie Schwefel oder insbesondere Stickstoff enthalten. Bewährt haben sich z.B. einzelne Verbindungen oder Gemische aus der Klasse der Benzothiazole, z.B. Mercaptobenzothiazol, Benzimidazole, z.B. 2-Phenylbenzimidazol, Triazole, z.B. Benzotriazole, Tolyltriazole, Oxazoline, z.B. Alkyl- und/oder Hydroxyalkyl-substituierte Oxazoline, Amide, Amine, z.B. tert. Amine. Weiterhin können den erfindungsgemäßen Zusammensetzungen ggf. übliche Stabilisatoren, insbesondere zur Stabilisierung der Dichlorpentafluorpropane, zugesetzt werden. Weiterhin können konsistenzregelnde Additive enthalten sein.

Die erfindungsgemäßen Zusammensetzungen liegen als Lösungen, als Dispersionen oder als Pasten vor, wobei unter Dispersionen sowohl Emulsionen als auch Suspensionen verstanden werden.

Die Erfindung umfaßt auch die Verwendung der Zusammensetzungen als Trenn-, Gleit- bzw. Schalmittel, z.B. bei der Kunststoff- oder Schaumstoffherstellung oder in anderen Anwendungsbereichen.

Weiterhin umfaßt die Erfindung das Verfahren zur Herstellung der erfindungsgemäßen Zusammensetzungen, wobei man in das Dichlorpentafluorpropan ein oder mehrere Agentien mit trennmittelwirksamen Eigenschaften in einer auf die gesamte Zusammensetzung bezogenen Menge von 0,1 bis 80 Gew.-%, vorzugsweise 0,1 bis 50 Gew.-%, einarbeitet. Gegebenenfalls werden gleichzeitig übliche Lösungsvermittler oder andere Zusätze wie Stabilisatoren, Korrosionsinhibitoren zugegeben.

Die erfindungsgemäßen Zusammensetzungen mit Dichlorpentafluorpropanen als Verdünnungs- bzw. Lösungsmittel weisen gegenüber den Zusammensetzungen des Standes der Technik mindestens gleichermaßen gute und zum Teil sogar verbesserte adhäsionsvermindernde Eigenschaften, hohe chemische Indifferenz und gutes Spreitungsvermögen auf. Gegenüber üblichen Trennmitteln, bei denen Kohlenwasserstoffe als Lösungsmittel verwendet werden, besitzen die erfindungsgemäßen Zusammensetzungen einen höheren oder sogar keinen Flammpunkt. Die Herstellung der erfindungsgemäßen Zusammensetzungen gestaltet sich infolge der sehr guten Dispergier-, Emulgier- bzw. Lösekraft der Dichlorpentafluorpropane (im Gegensatz zur Herstellung von Trennmitteln unter Verwendung von z.B. Kohlenwasserstoffen als Lösungsmittel) besonders einfach. Häufig sind nämlich gute trennmittelwirksame Agentien in den bisher im Stand der Technik verwendeten Lösungsmitteln relativ schwer löslich. Ein Vorteil der erfindungsgemäßen Zusammensetzungen besteht somit darin, daß die verwendeten Dichlorpentafluorpropane auch die Herstellung von solchen trennmittelwirksamen Zusammensetzungen gestatten, die diese an sich schwerlöslichen trennmittelwirksamen Agentien enthalten sollen. Weiterhin ist der Einsatz der erfindungsgemäßen Zusammensetzungen anstelle herkömmlicher Trennmittelzusammensetzungen ökonomischer, da bei gleicher Anwendung weniger Trennmittelzusammensetzung verbraucht wird. Zusätzliche Vorteile zeigen sich bei längerer Verwendung der Formen z.B. darin, daß die verwendeten Formen zwischen den Arbeitsgängen seltener gereinigt werden müssen.

Die nachfolgenden Beispiele sollen die Erfindung näher erläutern, ohne sie jedoch in ihrem Umfang zu begrenzen.

## Beispiel 1

Eine erfindungsgemäße Zusammensetzung wurde hergestellt aus 5 Gew.-% HF-Wachs-Addukt (bekannt als "Addukte" aus der deutschen Offenlegungsschrift 33 35 870) und 95 Gew.-% 1,1-Dichlor-2,2,3,3,3-pentafluorpropan (R225ca). Unter HF-Wachs-Addukt versteht man ein Wachsderivat, welches durch Fluorwasserstoff-Behandlung von ungesättigten langkettigen Estern von Carbonsäuren mit Monoalkoholen mit insgesamt 34 bis 50 C-Atomen erhalten wird, wobei dieses Derivat an die Doppelbindungen des Eduktes addierten Fluorwasserstoff aufweist. Die Herstellung dieses HF-Wachs-Adduktes entspricht dem Beispiel 1 der deutschen Offenlegungsschrift 33 35 870.

Die Zusammensetzung stellt eine klare Lösung dar und weist hervorragende trennmittelwirksame Eigenschaften auf.

## Beispiele 2 bis 16

Analog zu Beispiel 1 wurden die weiteren in der folgenden Tabelle wiedergegebenen Beispiele 2 bis 16 von erfindungsgemäßen Zusammensetzungen hergestellt, die ebenfalls hervorragende trennmittelwirksame Eigenschaften besitzen. Die Komponenten sind in Gew.-% angegeben.

## Patentansprüche

1. Flüssige Zusammensetzung eines Agens mit trennmittelwirksamen Eigenschaften, dadurch gekennzeichnet, daß die Zusammensetzung wenigstens einen wasserstoffhaltigen Fluorchlorkohlenwasserstoff aus der Gruppe der Dichlorpentafluorpropane enthält und daß als trennmittelwirksames Agens Wachse, Wachsderivate, Metallseifen oder Silicone oder ein Gemisch von diesen in einer Menge von 0,1 bis 80 Gew.-%, vorzugsweise 0,1 bis 50 Gew.-%, bezogen auf das Gesamtgemisch vorliegen.

2. Zusammensetzung nach Anspruch 1, dadurch gekennzeichnet, daß das Dichlorpentafluorpropan 1,1-Dichlor-2,2,3,3,3-pentafluorpropan (R225ca) oder 1,3-Dichlor-1,1,2,2,3-pentafluorpropan (R225cb) ist.

3. Zusammensetzung nach Anspruch 1, dadurch gekennzeichnet, daß die Wachse natürliche Wachse tierischer oder pflanzlicher Herkunft, vorzugsweise natürliche Wachse mit einem Erweichungspunkt von mindestens 40 °C, sind.

4. Zusammensetzung nach Anspruch 1, dadurch gekennzeichnet, daß die Wachse vorzugsweise ungesättigte langkettige Ester von Carbonsäuren mit Monoalkoholen mit insgesamt 34 bis 50 C-Atomen sind.

5. Zusammensetzung nach Anspruch 1, dadurch gekennzeichnet, daß die Wachsderivate Derivate sind, die durch Sulfochlorierung, Sulfidierung oder Fluorwasserstoffbehandlung von ungesättigten langkettigen Estern von Carbonsäuren mit Monoalkoholen mit insgesamt 34 bis 50 C-Atomen erhalten werden.

6. Zusammensetzung nach Anspruch 1, dadurch gekennzeichnet, daß die Wachse synthetische Wachse, vorzugsweise Paraffinwachse oder Polyethylenwachse, sind.

7. Zusammensetzung nach Anspruch 1, dadurch gekennzeichnet, daß die Silicone in Form von Ölen, Fetten, Harzen, Pasten oder Ölemulsionen vorliegen.

8. Zusammensetzung nach Anspruch 1, dadurch gekennzeichnet, daß die Metallseifen vorzugsweise fettsaure Salze der Metalle Magnesium, Calcium, Zink, Aluminium oder Blei, ggf. Salze der Stearinsäure dieser Metalle, sind.

9. Abgewandelte Zusammensetzungen nach einem der Ansprüche 1 und 2, dadurch gekennzeichnet, daß übliche Lösungsvermittler in Mengen von 1 bis 80 Gew.-%, vorzugsweise 10 bis 30 Gew.-%, bezogen auf das Gesamtgemisch enthalten sind.

10. Zusammensetzung nach Anspruch 9, dadurch gekennzeichnet, daß als Lösungsvermittler ein aliphatisches Kohlenwasserstoff-Lösungsmittel, vorzugsweise eine Benzinfraktion mit einem Siedebereich von z.B. 100 bis 140 °C, enthalten ist.

11. Verwendung von Zusammensetzungen gemäß einem der vorangehenden Ansprüche als Trenn-, Gleit- bzw. Schalmittel.

12. Verfahren zur Herstellung von Zusammensetzungen gemäß Anspruch 1, dadurch gekennzeichnet, daß man in das Dichlorpentafluorpropan ein oder mehrere Agentien mit trennmittelwirksamen Eigenschaften in einer auf das Gesamtgemisch bezogenen Menge von 0,1 bis 80 Gew.-%, vorzugsweise 0,1 bis 50 Gew.-%, sowie ggf. übliche Lösungsvermittler einarbeitet.